# EUROPÄISCHE PATENTSCHRIFT

(11) **EP 2 900 535 B1**
(45) Veröffentlichungstag und Bekanntmachung des Hinweises auf die Patenterteilung: **12.02.2020**
(21) Anmeldenummer: 13792293.6
(22) Anmeldetag: 08.11.2013
(51) Int. Cl.: B61D 17/12, F16B 37/04

(54) **KONSOLE ZUR VERBINDUNG VON DACHAUFBAUTEN EINES SCHIENENFAHRZEUGS MIT DEM SCHIENENFAHRZEUG**
BRACKET FOR CONNECTING ROOF-MOUNTED STRUCTURES OF A RAIL VEHICLE TO THE RAIL VEHICLE
CONSOLE PERMETTANT DE RELIER À UN VÉHICULE FERROVIAIRE DES SUPERSTRUCTURES DE TOIT

(30) Priorität: 30.11.2012 DE 102012221983
(43) Veröffentlichungstag der Anmeldung: 05.08.2015
(73) Patentinhaber: Siemens Mobility GmbH, 81739 München (DE)
(72) Erfinder: BAUMANN, Stefan, 86609 Donauwörth (DE); BOHRER, Markus, 90461 Nürnberg (DE)
(86) Internationale Anmeldenummer: PCT/EP2013/073335
(87) Internationale Veröffentlichungsnummer: WO 2014/082832

(56) Entgegenhaltungen:
- EP-A1- 2 505 449
- EP-A2- 0 990 574
- WO-A1-2004/040150
- WO-A1-2008/058615
- US-A1- 2004 033 121

## Beschreibung

Die Erfindung betrifft eine Konsole zur Verbindung von Dachaufbauten mit einem Schienenfahrzeug, welche einen Befestigungsflansch mit einer Bohrung zur Durchführung einer Schraube aufweist.

Das Dach eines Schienenfahrzeugs ist üblicherweise sehr stabil ausgestaltet, um schwere Aufbauten, beispielsweise Geräte wie Stromrichter, Hilfsbetriebeumrichter oder Klimageräte auf dem Dach des Schienenfahrzeugs anzubringen. Dazu sind entsprechend stabile Querträger zwischen den Dachlangträgern angeordnet, entweder gezielt nur in Bereichen, auf welchen Aufbauten vorgesehen sind, oder über die gesamte Länge des Dachs des Schienenfahrzeugs verteilt. Im ersten Fall sind die Positionen der Aufbauten festgelegt. Eine nachträgliche Änderung ihrer Positionen ist nicht möglich. Im zweiten Fall ist die Herstellung des Schienenfahrzeugs entsprechend kostenintensiv.

Das Dokument EP 0 990 574 A2 zeigt beispielsweise ein Schienenfahrzeug mit Querspriegeln.

Die Dokumente WO 2008/058615 A1, US 2004/0033121 A1 und WO 2004/040150 A1 betreffen jeweils Käfigmuttern.

Die Druckschrift EP 2 505 449 A1 offenbart einen Gewindeträger mit einer Umfassung zur Befestigung von Komponenten auf dem Dach eines Schienenfahrzeugs. Die Umfassung wird dabei fest mit dem Dach verbunden, wobei die Komponenten mit dem Gewindeträger verschraubt werden.

Der Erfindung liegt die Aufgabe zugrunde, eine hoch flexible Positionierung von Aufbauten auf einem Dach eines Schienenfahrzeugs kostengünstig zu ermöglichen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Eine erfindungsgemäße Konsole umfasst zur insbesondere lösbaren Verbindung von Dachaufbauten eines Schienenfahrzeugs mit dem Schienenfahrzeug zumindest einen Befestigungsflansch und zumindest eine Blechzunge. Der Befestigungsflansch weist zumindest eine Bohrung zur Durchführung einer Schraube auf. Die Blechzunge ist so zur Bohrung des Befestigungsflansches ausgerichtet, dass an ihr ein Nutenstein mit einer Aufnahme für die Schraube so positionierbar ist, dass die Aufnahme für die Schraube koaxial mit der Bohrung des Befestigungsflansches ist. Die Konsole dient der Verbindung zwischen Schienenfahrzeug und Dachaufbauten. Da nach der Montage der Konsole am Schienenfahrzeug eine schlechte Zugänglichkeit der Konsole gegeben ist, um einen Nutenstein manuell auszurichten, ist die Befestigungszunge vorgesehen, um den Nutenstein zur Bohrung zu positionieren.

Die Blechzunge ist Teil einer zunächst von der Konsole separaten Schweißbadsicherung zum Anschweißen der Konsole an das Schienenfahrzeug, insbesondere an eine zur Konsole komplementär ausgebildete Schiene eines Fahrzeugs. Die Schweißbadsicherung umfasst neben der Blechzunge eine Sicherungszone und besteht aus einem dünnen Blech, insbesondere aus Metall oder aus einer Metalllegierung. Die Schweißbadsicherung, insbesondere ihre Sicherungszone, ist entsprechend komplementär zur Konsole ausgestaltet. Sowohl die Konsole, als auch die zur Konsole komplementäre Schiene sind aus Metall oder einer Metalllegierung gerfertigt.

Die Sicherungszone der Schweißbadsicherung wird zwischen Konsole und Schienenfahrzeug, insbesondere dessen Schiene, befestigt, um das verflüssigte Metall aufzufangen. Dadurch kann mit einem wesentlich höheren Schweißstrom gearbeitet werden, der das Material bis in die Wurzellage durchdringt. Es wird mehr Material verflüssigt und die Metallteile verbinden sich komplett auf der gesamten Werkstückdicke.

Die Schweißbadsicherung wird beim Anschweißen der Konsole an das Schienenfahrzeug, insbesondere an die Schiene des Schienenfahrzeugs, auch mit der Konsole und/oder dem Schienenfahrzeug verschweißt und ist daher stoffschlüssig mit ihr verbunden. Die Schweißbadsicherung verbleibt somit nach dem Schweißen und/oder nach einem Verbinden der Dachaufbauten mit dem Schienenfahrzeug. Die Blechzunge ist fügestellenfrei an die Schweißbadsicherung angeformt, insbesondere ist die Schweißbadsicherung mitsamt der Blechzunge monolithisch hergestellt. Beispielsweise handelt es sich bei der Schweißbadsicherung mit der Blechzunge um ein gebogenes Blechteil, wobei die Blechzunge von Sicherungszone der Schweißbadsicherung weggebogen ist.

Ein erfindungsgemäßes Schienenfahrzeug, insbesondere ein Wagen eines Schienenfahrzeugs des Personenverkehrs, welcher einen Rohbau mit einem ersten und mindestens einem weiteren, zweiten Dachlangträger aufweist, umfasst zum Anbringen von Dachaufbauten auf dem Dach des Schienenfahrzeugs eine erste und zumindest eine weitere, zweite Schiene, und eine erste, zum Verbinden der Dachaufbauten mit der ersten Schiene komplementär zur ersten Schiene ausgestaltete und zumindest eine weitere, zum Verbinden der Dachaufbauten mit der zweiten Schiene komplementär zur zweiten Schiene ausgestaltete, zweite Konsole.

Die erste und zweite Konsole sind gemäß einem Ausgestaltungsbeispiel identisch ausgebildet, z.B. im Querschnitt trapezförmig.

Die erste Schiene ist unmittelbar mit dem ersten Dachlangträger, insbesondere stoffschlüssig, beispielsweise durch Schweißen, verbunden und die zweite Schiene ist unmittelbar, insbesondere analog und gleichartig zur ersten Schiene, mit dem zweiten Dachlangträger verbunden. Insbesondere verlaufen die Schienen entlang der Dachlangträger. Eine weitere Weiterbildung sieht vor, dass die Schienen mit äußeren Dachlangträgern des Schienenfahrzeugs verbunden sind, so dass sie parallel zueinander und beabstandet voneinander auf unterschiedlichen Seiten des Dachs des Schienenfahrzeugs verlaufen. Die Schienen können dabei im Querschnitt L-förmig ausgeformt sein. Die Schienen dienen allgemein einem freien Positionieren von den Konsolen entlang der Schienen, bevor die Konsolen mit den Schienen, insbesondere stoffschlüssig, beispielsweise durch Schweißen, verbunden werden. Die Konsolen dienen wiederum der Verbindung von den Schienen und den Dachaufbauten, insbesondere als Verbindungsglieder zwischen den Schienen und den Dachaufbauten direkt oder indirekt, indem Traversen zwischen den Konsolen und den Dachaufbauten als weitere Verbindungsglieder vorgesehen sind. Eine Traverse ist mit der der ersten und mit der zweiten Konsole verbunden, beispielsweise an die Konsolen angeschraubt. Alternativ sind die Dachaufbauten direkt mit den Konsolen verbunden.

Weitergebildet weist die Traverse zur Verbindung mit den Konsolen eine erste Schnittstelle zur ersten Konsole und eine zweite Schnittstelle zur zweiten Konsole auf, welche erste und zweite Schnittstelle insbesondere gleich ausgestaltet sind.

Beispielsweise weisen die erste und/oder die zweite Konsole Langlöcher in eine erste horizontale Richtung als Bohrungen auf und die Traverse weist Langlöcher in eine zweite horizontale Richtung auf, welche senkrecht auf der ersten Richtung steht. So sind Toleranzen leicht auszugleichen.

Die Konsolen sind zunächst frei entlang der Schienen Positionierbar, was bedeutet, dass sie zumindest entlang eines Schienenabschnitts frei positionierbar und mit der Schiene verbindbar sind, welcher eine Länge von mindestens der doppelten, der fünffachen oder insbesondere gar mehr als der zehnfache Breite der Konsole aufweist. Die Breite der Konsole wird dabei in Längsrichtung der Schiene gemessen. Insbesondere sind Konsolen entlang der gesamten Länge der Schienen frei positionierbar. Die Schienen wiederum erstrecken sich gemäß einer Weiterbildung der Erfindung über die gesamte Länge des Rohbaus des Wagens des Schienenfahrzeugs.

So sind die Dachaufbauten lösbar mit dem Dach des Schienenfahrzeugs verbunden und können mittels der Konsolen an beliebigen Stellen des Dachs positioniert werden. Das Dach zwischen den Dachlangträgern des Schienenfahrzeugs kann hingegen leicht und ungeeignet zum Tragen der Dachaufbauten, jedoch sehr kostengünstig hergestellt sein.

Eine weitere Weiterbildung der Konsole ist darin zu sehen, dass die Blechzunge zur Führung des Nutensteins radial zur Achse der Bohrung des Befestigungsflanschs eine Oberfläche senkrecht zur Achse der Bohrung des Befestigungsflanschs aufweist, an welcher der Nutenstein zur Bohrung positioniert wird. Insbesondere weist diese Oberfläche eine zum Nutenstein komplementäre Kontur auf. Der Nutenstein wird in einfacher Weise auf diese Oberfläche der Blechzunge gelegt. Dies geschieht in sinnvoller weise im ruhenden Zustand des Schienenfahrzeugs, und insbesondere auch im montierten Zustand der Konsole. Dadurch wird ein auf der Oberfläche der Blechzunge anliegender Nutenstein in der Ebene der Oberfläche geführt. Auch die Blechzunge kann zur Durchführung der Schraube eine Aussparung aufweisen. Sind zwei oder mehrere Bohrungen im Befestigungsflansch zur Durchführung von Schrauben vorgesehen, so kann die Blechzunge analog mehrere Aussparungen aufweisen.

Der Nutenstein weist beispielsweise eine Gewindebohrung zur Aufnahme der Schraube koaxial mit der Bohrung des Befestigungsflansches auf. Alternativ weist der Nutenstein beispielsweise eine Gewindestange auf, d.h. er ist fügestellenfrei mit ihr verbunden, z.B. ist er zusammen mit einer Stange monolithisch hergestellt, welche anschließend mit einem Gewinde versehen wird. Der Nutenstein liegt gemäß einer Ausführungsform an einer Unterseite des Befestigungsflansches an. Zwischen den Schraubenkopf der Schraube oder eine Mutter auf der Gewindestange und einer Oberseite des Befestigungsflansches sind die Aufbauten verschraubt.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch eine erfindungsgemäße Konsole im Querschnitt,
- Fig. 2: zeigt schematisch die Konsole aus Fig. 1 im Längsschnitt,
- Fig. 3: zeigt perspektivisch eine Schweißbadsicherung und eine Konsole,
- Fig. 4: zeigt perspektivisch zwei Konsolen auf einer Schiene.

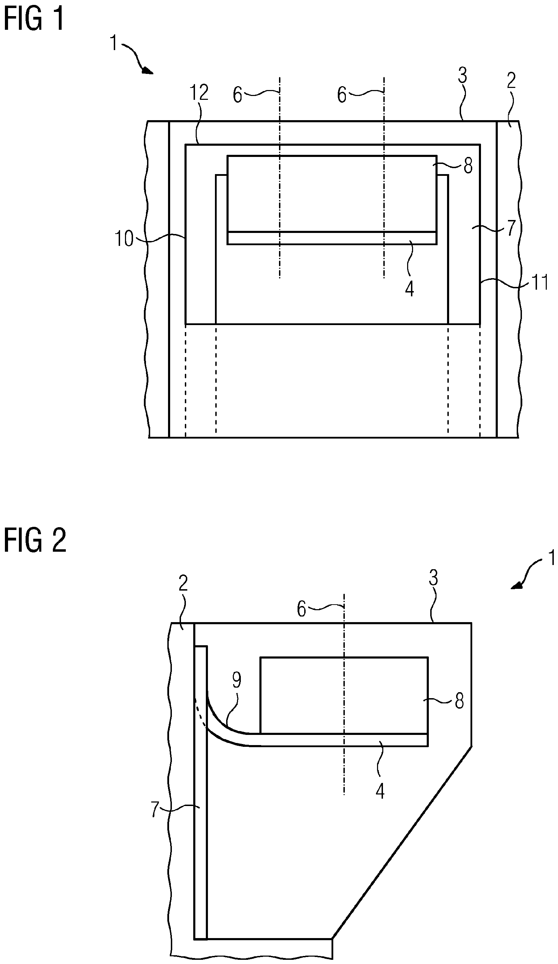

In Fig. 1 und Fig. 2 ist eine erfindungsgemäße Konsole 1 in Teilschnitten dargestellt, welche an eine L-förmige Schiene 2 eines Schienenfahrzeugs angeordnet ist. Die Konsole 1 umfasst einen Befestigungsflansch 3 mit zwei Bohrungen zum Durchführen von jeweils einer Schraube oder einer Gewindestange. Es handelt sich um Durchgangsbohrungen, welche hier lediglich durch ihre Bohrungsachsen 6 angedeutet sind. Die Schrauben oder Gewindestangen zur Verbindung von Dachaufbauten mit der Konsole und damit mit dem Schienenfahrzeug sind hier nicht dargestellt. Weiterhin umfasst die Konsole 1 eine Schweißbadsicherung mit einer Blechzunge 4 und einer Sicherungszone 7.

Die Blechzunge 4 dient als Auflage für einen Nutenstein 8 oder eine Gewindeplatte und deren Positionierung zu den Bohrungen im Befestigungsflansch 3. Bei der Montage von Dachaufbauten kann eine Zugänglichkeit der Konsole 1 nicht gegeben sein, um einen Nutenstein 8 manuell anzulegen. Die Blechzunge 4 ist im hier skizzierten, montierten Zustand der Konsole 1 so zu den Bohrungsachsen 6 der Bohrungen im Befestigungsflansch 3 angeordnet, dass der Nutenstein 8 mit einer Aufnahme für die Schrauben oder Gewindestangen koaxial zu den Bohrungen des Befestigungsflansches 3 ausgerichtet sind. Der Befestigungsflansch 3 und die Blechzunge 4 bilden hier zwei horizontale, zueinander parallele Flächen.

Die Schweißbadsicherung ist hier als einfaches Blechbiegeteil mit einer Abkantung 9 ausgestaltet. Die Sicherungszone 7 der Schweißbadsicherung erstreckt sich hier in vertikaler Richtung. Sie liegt an der Schiene 2 an. Die Blechzunge 4 weist zur Sicherungszone 7 entsprechend einen Winkel von ungefähr 90° auf. Die Sicherungszone 7 dient der Abstützung des flüssigen Schweißbads beim Anschweißen der Konsole 1 an die Schiene 2. Sie sichert die Schweißnähte 10, 11 und 12, mittels welcher die Konsole 1 mit der Schiene 2 stoffschlüssig verbunden ist. Die Sicherungszone 7 der Schweißbadsicherung ist entsprechend komplementär zur Konsole 1 ausgeformt, hier als ebene Fläche. Auch die Schweißbadsicherung ist nach dem Anschweißen der Konsole 1 stoffschlüssig mit der Schiene 2 und/oder mit der Konsole 1 verbunden. Sie verbleibt somit an bzw. hier in der Konsole 1.

Die Schiene 2 ist gemäß einem Ausführungsbeispiel der Erfindung unmittelbar mit einem Dachlangträger des Schienenfahrzeugs verbunden oder sie ist gar Teil eines Dachlangträgers. Die Schiene 2 weist hier einen L-förmigen Querschnitt auf. Die Konsole 1 berührt die Schiene 2 sowohl an ihrer vertikalen Fläche, als auch an ihrer horizontalen. Sie liegt hier jedoch auf der horizontalen Fläche lediglich auf, ohne mit ihr stoffschlüssig verbunden zu sein. Natürlich könnte sie auch mit dieser Fläche der Schiene 2 verschweißt oder anderweitig verbunden sein.

Dachaufbauten können direkt an die Konsole 1 geschraubt werden oder mittels einer Traverse, welche über das Dach des Schienenfahrzeugs mit zwei Konsolen 1 auf unterschiedlichen Seiten des Schienenfahrzeugs angeordnet sind, mit dem Schienenfahrzeug verbunden sein. Dann sind zumindest zwei Konsolen 1 an zwei Schienen 2 unmittelbar an beiden äußeren Dachlangträgern des Schienenfahrzeugs angeordnet.

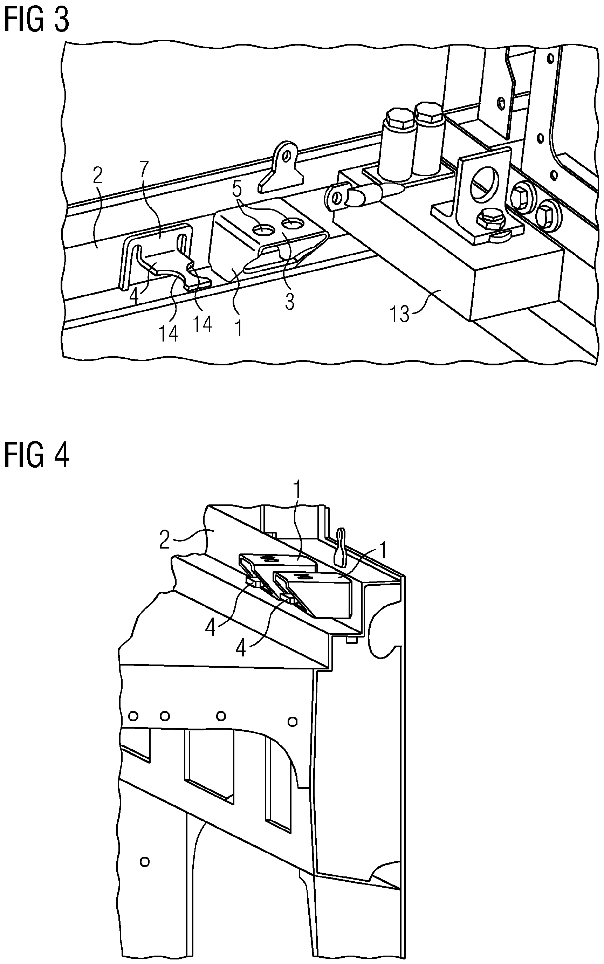

Fig. 3 zeigt eine verbleibende Schweißbadsicherung mit einer Sicherungszone 7 und einer Blechzunge 4 für eine erfindungsgemäße Konsole 1 für ein Schienenfahrzeugs des Personenverkehrs, welche mit ihrer Sicherungszone 7 an einer Schiene 2 des Schienenfahrzeugs anliegt. Im montierten Zustand ist sie von der nebenan veranschaulichten Konsole 1 zum Befestigen von Aufbauten auf einem Dach des Schienenfahrzeugs umschlossenen. Der Befestigungsflansch 3 der Konsole 1 weist zwei Langlöcher 5 auf, welche in Richtung der Schiene gelängt sind. Die Blechzunge 4 weist zwei Aussparungen 14 auf, um die Schrauben durchzuführen. Eine neben der Konsole 1 angeordnete Traverse 13 ist mittels einer erfindungsgemäßen Konsole am Schienenfahrzeug verschraubt. Sie weist Langlöcher mit einer Längung senkrecht zur Längung der Bohrungen 5 der Konsole 1 auf, um Toleranzen auszugleichen. Die Traverse 13 dient als Träger für die Dachaufbauen, welche ihrerseits mit ihr verschraubt werden.

Fig. 4 zeigt zwei frei entlang der Schiene 2 positionierbare Konsolen 1. Die Blechzungen 4 der Schweißbadsicherungen der Konsolen 1 ragen zumindest bis unterhalb der als Langlöcher ausgestalteten Bohrungen der Befestigungsflansche, um Nutensteine oder Gewindeplatten zu halten. Hier ragen sie etwas aus den Konsolen 1 heraus. Die Schiene 2 ist hier Teil eines äußeren Dachlangträgers des Schienenfahrzeugs.

## Patentansprüche

1. Konsole (1) zur Verbindung von Dachaufbauten eines Schienenfahrzeugs mit dem Schienenfahrzeug, welche zumindest einen Befestigungsflansch (3) aufweist, welcher zumindest eine Bohrung (5) zur Durchführung einer Schraube aufweist, **dadurch gekennzeichnet, dass** die Konsole (1) eine Blechzunge (4) aufweist, welche so zur Bohrung (5) des Befestigungsflansches (3) ausgerichtet ist, dass an ihr ein Nutenstein (8) mit einer Aufnahme für die Schraube koaxial zur Bohrung (5) des Befestigungsflansches (3) positionierbar ist, wobei zum Anschweißen der Konsole (1) am Schienenfahrzeug eine Schweißbadsicherung vorgesehen ist, mit welcher die Blechzunge (4) verbunden ist und wobei die Schweißbadsicherung mit der Konsole (1) stoffschlüssig verbunden ist.

2. Konsole (1) nach Anspruch 1, **dadurch gekennzeichnet, dass** die Blechzunge (4) zur Führung des Nutensteins (8) radial zur Bohrung (5) des Befestigungsflansches (3) eine Oberfläche senkrecht zur Bohrung (5) des Befestigungsflansches (3) aufweist.

3. Konsole (1) nach Anspruch 1, **dadurch gekennzeichnet, dass** die Blechzunge (4) und die Schweißbadsicherung fügestellenfrei verbunden sind.

4. Konsole (1) nach einem der Ansprüche 1 bis 3, **dadurch gekennzeichnet, dass** der Werkstoff der Schweißbadsicherung ein Metall oder eine Metalllegierung enthält.

5. Konsole (1) nach einem der Ansprüche 1 bis 4, **dadurch gekennzeichnet, dass** die Blechzunge (4) zur Durchführung der Schraube zumindest eine Aussparung (4) aufweist.

6. Konsole nach einem der Ansprüche 1 bis 5, **dadurch gekennzeichnet, dass** der Nutenstein (8) eine Gewindebohrung zur Aufnahme der Schraube koaxial mit der Bohrung (5) des Befestigungsflansches (3) aufweist.

7. Schienenfahrzeug mit einem Rohbau mit einem ersten und zumindest einem weiteren, zweiten Dachlangträger, **dadurch gekennzeichnet, dass** es eine erste und zumindest eine weitere, zweite Schiene (2) zum freien Positionieren von einer ersten und zumindest einer weiteren, zweiten Konsole (1) nach einem der Ansprüche 1 bis 6 entlang der Schienen (2) umfasst.

8. Schienenfahrzeug nach Anspruch 7, **dadurch gekennzeichnet, dass** es zur Verbindung der Dachaufbauten zumindest eine Traverse (13) umfasst, welche mit der ersten und mit der zweiten Konsole (1) verbunden ist.

## Claims

1. Bracket (1) for connecting roof-mounted structures of a rail vehicle to the rail vehicle, which has at least one mounting flange (3), said mounting flange having at least one hole (5) through which a screw can be fed, **characterised in that** the bracket (1) has a sheet metal tongue (4) which is oriented in relation to the hole (5) of the mounting flange (3) such that a slot nut (8) with a receptacle for the screw is able to be positioned on said hole coaxial to the hole (5) of the mounting flange (3), wherein a welding backing is provided for welding the bracket (1) to the rail vehicle, to which the sheet metal tongue (4) is connected and wherein the welding backing is integrally bonded to the bracket (1).

2. Bracket (1) according to claim 1, **characterised in that** the sheet metal tongue (4) has a surface perpendicular to the hole (5) of the mounting flange (3) for guiding the slot nut (8) radially in relation to the hole (5) of the mounting flange (3).

3. Bracket (1) according to claim 1, **characterised in that** the sheet metal tongue (4) and the welding backing are connected in a joint-free manner.

4. Bracket (1) according to one of claims 1 to 3, **characterised in that** the welding backing material contains a metal or a metal alloy.

5. Bracket (1) according to one of claims 1 to 4, **characterised in that** the sheet metal tongue (4) has at least one recess (4) through which a screw can be fed.

6. Bracket according to one of claims 1 to 5, **characterised in that** the slot nut (8) has a threaded hole for receiving the screw coaxially in relation to the hole (5) of the mounting flange (3).

7. Rail vehicle with a carbody with a first and at least a further, second longitudinal roof member, **characterised in that** said rail vehicle comprises a first and at least a further, second rail (2) for the free positioning of a first and at least a further, second bracket (1) according to one of claims 1 to 6 along the rails (2).

8. Rail vehicle according to claim 7, **characterised in that** said rail vehicle comprises at least one cross member (13) for connecting the roof-mounted structures, which is connected to the first and second bracket (1).

## Revendications

1. Console (1) pour relier des structures de toit d'un véhicule ferroviaire au véhicule ferroviaire, qui a au moins une bride (3) de fixation, laquelle a au moins un trou (5) pour le passage d'une vis, **caractérisée en ce que** la console (1) a une languette (4) en tôle, qui est dirigée vers le trou (5) de la bride (3) de fixation, de manière à ce qu'un coulisseau (8), ayant un évidement pour la vis, puisse y être mis en position coaxialement au trou (5) de la bride (3) de fixation, dans laquelle il est prévu, pour souder la console (1) au véhicule ferroviaire, une sécurité au bain de soudure, à laquelle la languette (4) de tôle est reliée et dans laquelle la sécurité au bain de soudure est reliée à coopération de matière à la console (1).

2. Console (1) suivant la revendication 1, **caractérisée en ce que** la languette (4) de tôle a, pour guider le coulisseau (8) radialement vers le trou (5) de la bride (3) de fixation, une surface perpendiculaire au trou (5) de la bride (3) de fixation.

3. Console (1) suivant la revendication 1, **caractérisée en ce que** la languette (4) de tôle et la sécurité au bain de soudure sont reliées sans point de joint.

4. Console (1) suivant l'une des revendications 1 à 3, **caractérisée en ce que** le matériau de la sécurité au bain de soudure contient un métal ou un alliage de métaux.

5. Console (1) suivant l'une des revendications 1 à 4, **caractérisée en ce que** la languette (4) de tôle a au moins un évidement (4) pour le passage de la vis.

6. Console (1) suivant l'une des revendications 1 à 5, **caractérisée en ce que** le coulisseau (8) a un taraudage de réception de la vis coaxialement au trou (5) de la bride de fixation.

7. Véhicule ferroviaire comprenant un chaudron ayant un premier et au moins un autre deuxième longeron de toit, **caractérisé en ce qu'**il comprend une première et au moins une autre deuxième barre (2) pour mettre en position librement une première et au moins une autre deuxième console (1) suivant l'une des revendications 1 à 6 le long des barres (2).

8. Véhicule ferroviaire suivant la revendication 7, **caractérisé en ce qu'**il comprend, pour relier les structures de toit, au moins une traverse (13), qui est assemblée à la première et à la deuxième consoles (1).
